# EUROPÄISCHE PATENTANMELDUNG

(11) **EP 4 480 978 A1**
(43) Veröffentlichungstag der Anmeldung: **25.12.2024**
(21) Anmeldenummer: 23180644.9
(22) Anmeldetag: 21.06.2023
(51) Int. Cl.: C08G 18/10, C08G 18/28, C08G 18/38, C08G 18/48, C08G 18/75, C08G 18/76, C08G 16/02, C08K 3/04, C08K 3/22, C08K 3/26, C08K 3/34, C08K 3/36, C08K 5/12

(54) **HÄRTBARE ZUSAMMENSETZUNG MIT ALDEHYDFUNKTIONELLEM POLYMER**

(71) Anmelder: Sika Technology AG, 6340 Baar (CH)
(72) Erfinder: KASEMI, Edis, 8046 Zürich (CH); KRAMER, Andreas, 8008 Zürich (CH); BURCKHARDT, Urs, 8049 Zürich (CH); HÄBERLE, Hans, 78262 Gailingen (DE); DEEVA, Anna, 5600 Lenzburg (CH)
(74) Vertreter: Sika Patent Attorneys

(57) **Zusammenfassung**

Gegenstand der Erfindung ist eine härtbare Zusammensetzung umfassend
- eine erste Komponente enthaltend mindestens ein Aldehydgruppen-haltiges Polymer mit Kohlenwasserstoff-, Polyether- oder Polyestergerüst, und
- eine zweite Komponente enthaltend mindestens eine Verbindung mit zwei oder mehr Thiolgruppen.

Die Zusammensetzung härtet bei Umgebungsbedingungen unabhängig von Feuchtigkeit schnell und störungsfrei zu einem elastischen Polymer von hoher Festigkeit und Dehnbarkeit, guten Haftungseigenschaften und guter Stabilität gegenüber Hitze und Wasser aus. Sie ist besonders geeignet für die Verwendung als elastischer Klebstoff, Dichtstoff oder Beschichtung mit hoher Robustheit bei der Herstellung, Lagerung, Verarbeitung und im Gebrauch.

## Beschreibung

### Technisches Gebiet

Die Erfindung betrifft reaktive Polymerzusammensetzungen und ihre Verwendung als bei Raumtemperatur härtbare elastische Klebstoffe, Dichtstoffe oder Beschichtungen.

### Stand der Technik

Reaktive Polymerzusammensetzungen, die bei Raumtemperatur aushärtbar sind und als Klebstoffe, Dichtstoffe oder Beschichtungen mit elastischen Eigenschaften verwendet werden können, sind bekannt. Weit verbreitet sind Polyurethansysteme, welche durch die Reaktion von Isocyanatgruppen mit Polyolen und/oder Feuchtigkeit aushärten und besonders hochelastische Polymere bilden. Die Formulierung, Herstellung und Verwendung von Polyurethansystemen stellt in der Praxis eine Reihe von Herausforderungen. Die Systeme enthalten zumeist erhebliche Mengen an monomeren Diisocyanaten, welche eine Reizwirkung auf Augen, Haut und Schleimhäute ausüben können. Die Feuchteempfindlichkeit der Isocyanatgruppen kann zu vorzeitigen Vernetzungsreaktionen verbunden mit Viskositätserhöhung bis hin zur Gelierung führen und damit die Haltbarkeit bzw. Lagerstabilität beeinträchtigen. Bei einkomponentig formulierten Systemen muss das für die Aushärtung benötigte Wasser in Form von Luftfeuchtigkeit von aussen eindringen, was die Anwendung in dicken Schichten oder zwischen feuchtigkeitsdichten Substraten erschwert. Bei zweikomponentigen Systemen mit einer Polyol- und einer Isocyanat-Komponente besteht die Problematik, dass die Isocyanatgruppen nicht nur mit den Hydroxylgruppen der Polyole, sondern auch mit gegebenenfalls vorhandenem Wasser reagieren können, was Blasenbildung und unvollständig vernetzte Polymere bewirken kann.

Ebenfalls weit verbreitet sind reaktive Polymerzusammensetzungen auf der Basis von silanfunktionellen Polymeren oder Silikonen. Diese Polymersysteme härten durch Hydrolyse und Kondensation von Silangruppen aus, wobei Alkohole, vor allem Methanol oder Ethanol, oder Oxime freigesetzt werden, welche giftig sind und Emissionen verursachen; zudem enthalten sie meist hohe Mengen an niedrigmolekularen Silanen, welche ebenfalls gesundheitsschädlich sind. Aufgrund der Feuchteempfindlichkeit der Silangruppen sind auch diese Polymersysteme in der Herstellung und Verwendung anspruchsvoll und führen nicht immer zu den gewünschten Ergebnissen.

In Polym.Chem., 2019, 10, 219 wird die Vernetzung von Mercaptogruppen-haltigen Silikonen mit Aldehyden wie Benzaldehyd oder Terephthaldehyd beschrieben. Solche Polysiloxanketten-enthaltende Polymersysteme sind nicht überstreichbar und schlecht verträglich mit vielen Inhaltsstoffen und Substraten. Sie sind daher nur für spezielle Anwendungen geeignet.

### Darstellung der Erfindung

Aufgabe der vorliegenden Erfindung ist es, eine neue, bei Raumtemperatur härtbare Polymerzusammensetzung zur Verfügung zu stellen, welche geeignet ist als elastischer Klebstoff, Dichtstoff oder Beschichtung und die Nachteile der bekannten Polymersysteme überwindet.

Diese Aufgabe wird mit einer härtbaren Zusammensetzung wie in Anspruch 1 beschrieben gelöst. Die Zusammensetzung umfasst eine erste Komponente enthaltend mindestens ein Aldehydgruppen-haltiges Polymer mit Kohlenwasserstoff-, Polyether- oder Polyestergerüst und eine zweite Komponente enthaltend mindestens eine Verbindung mit zwei oder mehr Thiolgruppen. Die erfindungsgemässe Zusammensetzung hat gegenüber Polymersystemen nach dem Stand der Technik mehrere überraschende und vorteilhafte Eigenschaften.

Die Zusammensetzung ist nicht empfindlich gegenüber Feuchtigkeit und ermöglicht eine hohe Freiheit beim Formulieren, da in härtbaren Zusammensetzungen üblicherweise eingesetzte Zusatzstoffe in beiden Komponenten eingesetzt werden können, ohne dabei Probleme mit der Lagerstabilität der jeweiligen Komponente zu verursachen. Weiterhin ist die Zusammensetzung bei Umgebungsbedingungen gut verarbeitbar, wobei typischerweise kaum organische Lösemittel zum Lösen oder Verdünnen und kein Wasser zum Emulgieren oder Dispergieren von Bestandteilen benötigt wird. Die Zusammensetzung härtet bei Umgebungsbedingungen unabhängig von Feuchtigkeit überraschend schnell und störungsfrei aus, ohne dabei Emissionen zu verursachen. Zudem ist die Aushärtung mittels handelsüblichen Säuren wie Toluolsulfonsäure oder Dodecylbenzolsulfonsäure sehr gut steuerbar, wodurch keine Metall-haltigen Katalysatoren notwendig sind. Bei der Aushärtung entsteht ein nicht-klebriges, elastisches Polymer von hoher Festigkeit und Dehnbarkeit, mit guter Weiterreissfestigkeit und guten Haftungseigenschaften. Überraschenderweise zeigt die erfindungsgemässe Zusammensetzung enthaltend ein Aldehydgruppen-haltiges Polymer und ein Thiol als Härter deutlich bessere Eigenschaften im Vergleich zu einem umgekehrten System mit einem Mercaptogruppen-haltigen Polymer und einem Aldehyd als Härter. Dies ist aus dem Stand der Technik nicht ersichtlich.

In einer bevorzugten Ausführungsform der Erfindung enthält die Zusammensetzung mindestens einen Füllstoff ausgewählt aus Aluminiumoxid, Aluminiumhydroxid, Zinkoxid und Zinkhydroxid, insbesondere Aluminiumhydroxid. Eine solche Zusammensetzung zeigt nach der Aushärtung eine besonders hohe Festigkeit bei hoher Dehnbarkeit und eine überraschend gute Stabilität gegenüber Hitze und Feuchtigkeit.

Die härtbare Zusammensetzung ist besonders geeignet für die Verwendung als elastischer Klebstoff, Dichtstoff oder Beschichtung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
- eine erste Komponente enthaltend mindestens ein Aldehydgruppen-haltiges Polymer mit Kohlenwasserstoff-, Polyether- oder Polyestergerüst, und
- eine zweite Komponente enthaltend mindestens eine Verbindung mit zwei oder mehr Thiolgruppen.

Als "Molekulargewicht" wird die molare Masse (in Gramm pro Mol) eines Moleküls bezeichnet. Als "mittleres Molekulargewicht" wird das Zahlenmittel des Molekulargewichts Mₙ einer polydispersen Mischung von oligomeren oder polymeren Molekülen bezeichnet. Es wird mittels Gelpermeationschromatographie (GPC) gegen Polystyrol als Standard bestimmt.

Mit "Poly" beginnende Substanznamen wie Polymercaptan, Polyaldehyd, Polyisocyanat oder Polyol bezeichnen Substanzen, die formal zwei oder mehr der in ihrem Namen vorkommenden funktionellen Gruppen pro Molekül enthalten.

Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Füllstoff" wird eine bei Raumtemperatur feste, pulverförmige Substanz bezeichnet, welche in der härtbaren Zusammensetzung nicht löslich ist.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Die erste und die zweite Komponente der härtbaren Zusammensetzung sind für sich allein lagerstabil und werden in voneinander getrennten Gebinden gelagert, bis sie kurz vor oder während der Applikation miteinander vermischt werden.

Bevorzugt ist das Aldehydgruppen-haltige Polymer bei Raumtemperatur flüssig. Insbesondere weist es eine Viskosität bei 20 °C von 0.5 bis 1'000 Pa·s, bevorzugt 1 bis 500 Pa s, insbesondere 2 bis 200 Pa s, auf, gemessen mittels Kegel-Platten Viskosimeter mit Kegeldurchmesser 10 mm, Kegelwinkel 1°, Kegelspitze-Platten-Abstand 0.05 mm und Scherrate 10 s⁻¹. Solche Polymere sind bei Umgebungstemperaturen auch ohne Zusatz von Lösemitteln oder Verdünnern gut handhabbar.

Das Aldehydgruppen-haltige Polymer weist ein Kohlenwasserstoff-, Polyether- oder Polyestergerüst auf.

Als Kohlenwasserstoffgerüst geeignet sind insbesondere Kohlenwasserstoffketten oder mit Acrylatgruppen substituierte Kohlenwasserstoffketten. Bevorzugt sind Kohlenwasserstoffketten, insbesondere Polybutadienketten.

Als Polyethergerüst geeignet sind insbesondere Poly(oxyalkylen)ketten. Bevorzugt als Poly(oxyalkylen) ist Poly(oxyethylen), Poly(oxy-1,2-propylen), Poly(oxy-1,3-propylen), Poly(oxy-1,4-butylen), Poly(oxy-1,2-butylen) oder eine Mischform dieser Poly(oxyalkylene). Davon bevorzugt ist Poly(oxy-1,2-propylen), Poly(oxy-1,3-propylen) oder Poly(oxy-1,4-butylen), insbesondere Poly(oxy-1,2-propylen), wobei ein Poly(oxy-1,2-propylen)-Gerüst einen Gehalt an Poly(oxyethylen)-Einheiten von 0 bis 20 Gewichts-% bezogen auf das Poly(oxyalkylen)-Gerüst enthalten kann, insbesondere an den Kettenenden.

Als Polyestergerüst geeignet sind insbesondere Polyesterketten abgeleitet von Lactonen oder von Di- oder Tricarbonsäuren und Di- oder Triolen, sowie Triglycerid enthaltende Ketten.

Bevorzugt sind Di- oder Tricarbonsäuren ausgewählt aus Bernsteinsäure, Glutarsäure, Adipinsäure, Pimelinsäure, Korksäure, Azelainsäure, Sebacinsäure, Dodecandicarbonsäure, Maleinsäure, Fumarsäure, Phthalsäure, Isophthalsäure, Terephthalsäure, Hexahydrophthalsäure, Dimerfettsäuren undTrimerfettsäuren. Bevorzugt sind Diole oder Triole ausgewählt aus 1,2-Ethandiol, Diethylenglykol, 1,2-Propandiol, Dipropylenglykol, 1,4-Butandiol, 1,5-Pentandiol, 1,6-Hexandiol, Neopentylglykol, 1,3-Cyclohexandimethanol, 1,4-Cyclohexandimethanol, Trimethylolpropan, Glycerin, Ricinusöl, Dimerfettalkoholen und Trimerfettalkoholen. Besonders bevorzugt sind Polyesterketten enthaltend Ester von Dimerfettsäuren, Trimerfettsäuren, Adipinsäure und/oder Terephthalsäure, insbesondere Ester von Dimer- oder Trimerfettsäuren.

Weiterhin besonders bevorzugt sind Polyesterketten enthaltend Triglyceride, insbesondere abgeleitet von Ricinusöl, Derivaten von Ricinusöl oder Pflanzenölen. Bevorzugt sind Aldehydgruppen-haltige Polymere mit einem Polyether- oder Polyestergerüst.

Besonders bevorzugt sind Aldehydgruppen-haltige Polymere mit einem Polyethergerüst. Solche Polymere sind einfach zugänglich, vergleichsweise niedrigviskos und ermöglichen eine hohe Dehnbarkeit der ausgehärteten Zusammensetzung. Weiterhin besonders bevorzugt sind Aldehydgruppen-haltige Polymere mit einem Polyestergerüst enthaltend Ester von Di- oder Trimerfettsäuren oder Triglyceride. Solche Polymere sind besonders nachhaltig.

Bevorzugt weist das Aldehydgruppen-haltige Polymer ein mittleres Molekulargewicht Mₙ von 500 bis 20'000 g/mol, bevorzugt 1'000 bis 15'000 g/mol, besonders bevorzugt 2'000 bis 10'000 g/mol, insbesondere 3'000 bis 8'000 g/mol, auf. Dies ermöglicht ausgehärtete Zusammensetzungen mit hoher Dehnbarkeit, Festigkeit und Beständigkeit.

Bevorzugt weist das Aldehydgruppen-haltige Polymer ein mittleres Aldehyd-Equivalentgewicht von 250 bis 6'000 g/eq, bevorzugt 500 bis 5'000 g/eq, besonders bevorzugt 800 bis 4'000 g/mol, insbesondere 1'500 bis 3'000 g/eq, auf.

Bevorzugt weist das Aldehydgruppen-haltige Polymer eine mittlere Aldehyd-Funktionalität von 1.6 bis 6, bevorzugt 1.7 bis 4, besonders bevorzugt 1.8 bis 3, auf.

Bevorzugt sind die Aldehydgruppen des Aldehydgruppen-haltigen Polymers jeweils an einen aromatischen oder heteroaromatischen Ring gebunden. Dies ermöglicht eine besonders zuverlässige und schnelle Aushärtung.

Bevorzugt sind die Aldehydgruppen an einen Furanring, Benzolring oder an ein Naphthalingerüst gebunden.

Ein besonders bevorzugtes Aldehydgruppen-haltiges Polymer ist ein bei Raumtemperatur flüssiges Urethangruppen-haltiges Polymer mit einer mittleren Aldehyd-Funktionalität von 1.7 bis 4, insbesondere 1.8 bis 3, und einem mittleren Molekulargewicht Mₙ von 1'000 bis 20'000 g/mol, bevorzugt 2'000 bis 10'000 g/mol, insbesondere 3'000 bis 8'000 g/mol, gemessen mittels Gelpermeationschromatographie (GPC) gegen Polystyrol als Standard.

Bevorzugt ist das Aldehydgruppen-haltige Polymer ein Reaktionsprodukt aus der Umsetzung von mindestens einem Hydroxyaldehyd mit mindestens einem Isocyanatgruppen-haltigen Polymer.

Bevorzugt ist das Isocyanatgruppen-haltige Polymer bei Raumtemperatur flüssig, insbesondere mit einer Viskosität bei 20 °C von 0.2 bis 500 Pa s, bevorzugt 0.5 bis 300 Pa s, insbesondere 1 bis 150 Pa s, gemessen mittels Kegel-Platten Viskosimeter mit Kegeldurchmesser 10 mm, Kegelwinkel 1°, Kegelspitze-Platten-Abstand 0.05 mm und Scherrate 10 s⁻¹.

Bevorzugt weist das Isocyanatgruppen-haltige Polymer einen NCO-Gehalt von 0.5 bis 8.4 Gewichts-%, bevorzugt 0.7 bis 5.5 Gewichts-%, insbesondere 1 bis 3.5 Gewichts-%, auf.

Bevorzugt werden der Hydroxyaldehyd und das Isocyanatgruppen-haltige Polymer in einem OH/NCO-Verhältnis von 1/1 bis 1.2/1 bei einer Temperatur von 40 bis 140 °C, bevorzugt 60 bis 120 °C, umgesetzt, gegebenenfalls in Anwesenheit eines geeigneten Katalysators.

Als Hydroxyaldehyd bevorzugt ist ein Hydroxyaldehyd mit einem Molekulargewicht von 60 bis 500 g/mol und mindestens einer an ein aromatisches C-Atom gebundenen Aldehydgruppe. Bevorzugt ist die Hydroxylgruppe des Hydroxyaldehyds an ein aliphatisches C-Atom gebunden.

Bevorzugt ist der Hydroxyaldehyd ausgewählt aus der Gruppe bestehend aus 5-Hydroxymethylfurfural, 2-(2-Hydroxyethoxy)benzaldehyd, höher ethoxyliertem 2-Hydroxybenzaldehyd, 3-(2-Hydroxyethoxy)benzaldehyd, höher ethoxyliertem 3-Hydroxybenzaldehyd, 4-(2-Hydroxyethoxy)benzaldehyd, höher ethoxyliertem 4-Hydroxybenzaldehyd, 4-(2-Hydroxyethoxy)-3-methoxybenzaldehyd, höher ethoxyliertem 4-Hydroxy-3-methoxybenzaldehyd, propoxyliertem 2-Hydroxybenzaldehyd, propoxyliertem 3-Hydroxybenzaldehyd, propoxyliertem 4-Hydroxybenzaldehyd, propoxyliertem 4-Hydroxy-3-methoxybenzaldehyd, 4,4'-(2-Hydroxypropan-1,3-diyl)-bis(oxy)-bis(benzaldehyd) und 4,4'-(2-Hydroxypropan-1,3-diyl)-bis(oxy)-bis(3-methoxybenzaldehyd).

Davon bevorzugt ist 5-Hydroxymethylfurfural, 2-(2-Hydroxyethoxy)benzaldehyd, 3-(2-Hydroxyethoxy)benzaldehyd, 4-(2-Hydroxyethoxy)benzaldehyd oder 4-(2-Hy-droxyethoxy)-3-methoxybenzaldehyd, insbesondere 5-Hydroxymethylfurfural oder 3-(2-Hydroxyethoxy)benzaldehyd. Diese Hydroxyaldehyde sind in einfachen Verfahren zugänglich und ermöglichen Aldehydgruppen-haltige Polymere mit gut handhabbarer Viskosität.

Als Isocyanatgruppen-haltiges Polymer geeignet sind insbesondere Umsetzungsprodukte von Polyolen mit Diisocyanaten, insbesondere in einem molaren NCO/OH-Verhältnis von 1.5/1 bis 10/1, bevorzugt von 3/1 bis 7/1, wobei nicht umgesetzte monomere Diisocyanate gegebenenfalls aus dem Polymer entfernt wurden.

Als Diisocyanat geeignet ist insbesondere 1,6-Hexandiisocyanat (HDI), 2,2(4),4-Trimethyl-1,6-hexandiisocyanat (TMDI), 1-Methyl-2,4(6)-diisocyanatocyclohexan (H₆TDI), Isophorondiisocyanat (IPDI), 4,4'-Diisocyanatodicyclohexylmethan (H₁₂MDI), 4(2),4'-Diphenylmethandiisocyanat (MDI) oder 2,4(6)-Toluendiisocyanat (TDI). Bevorzugt ist HDI, IPDI, TDI oder MDI. Besonders bevorzugt ist IPDI.

Als Polyol geeignet sind Polyole mit einem Kohlenwasserstoff-, Polyether- oder Polyestergerüst, insbesondere
- Polyetherpolyole, insbesondere Polyoxyalkylendiole oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran, oder Mischungen davon, wobei diese mit Hilfe eines Startermoleküls mit zwei oder mehreren aktiven Wasserstoffatomen polymerisiert sein können. Bevorzugte Polyetherpolyole sind Polyoxypropylendiole oder Polyoxypropylentriole, oder Ethylenoxid-terminierte (EO-endcapped) Polyoxypropylendiole oder -triole. Letztere sind Polyoxyethylen-polyoxypropylen-Mischpolyole, die insbesondere dadurch erhalten werden, dass Polyoxypropylendiole oder -triole nach Abschluss der Polypropoxylierungsreaktion mit Ethylenoxid weiter alkoxyliert werden und dadurch schliesslich primäre Hydroxylgruppen aufweisen. Bevorzugte Polyetherpolyole weisen einen Ungesättigtheitsgrad von weniger als 0.02 mEq/g, insbesondere weniger als 0.01 mEq/g, auf.
- Polyesterpolyole aus der Polykondensation von Dicarbonsäuren mit zwei- oder dreiwertigen Alkoholen, insbesondere Dimerfettsäure-basierte Polyesterpolyole, wie sie kommerziell beispielsweise von der Firma Cargill erhältlich sind.
- Polyhydroxyfunktionelle Fette oder Öle, insbesondere natürliche Fette oder Öle, wie inbesondere Rizinusöl, Derivate von Rizinusöl oder auf Pflanzenöl basierende Polyole, wie beispielsweise unter dem Handelsnamen Sovermol^{®} (von BASF) erhältlich.
- Polyetherpolyesterpolyole.
- Polykohlenwasserstoffpolyole, wie insbesondere Polybutadienpolyole.

Bevorzugt sind bei Raumtemperatur flüssige Polyole.

Bevorzugt sind Polyole mit einer OH-Zahl von 9 bis 115 mg KOH/g, bevorzugt 14 bis 60 mg KOH/g, insbesondere 18 bis 40 mg KOH/g.

Besonders bevorzugt sind Polyetherpolyole, Dimerfettsäure-basierte Polyesterpolyole oder Polyhydroxyfunktionelle Fette oder Öle. Am meisten bevorzugt sind Polyetherpolyole, insbesondere Polyoxypropylendiole, Polyoxypropylentriole, Ethylenoxid-terminierte Polyoxypropylendiole oder Ethylenoxid-terminierte Polyoxypropylentriole.

Die zweite Komponente der härtbaren Zusammensetzung enthält mindestens eine Verbindung mit zwei oder mehr Thiolgruppen.

Bevorzugt weist die Verbindung mit zwei oder mehr Thiolgruppen 2 bis 10, bevorzugt 2 bis 6, insbesondere 2 bis 4, Thiolgruppen auf.

Bevorzugt weist die Verbindung mit zwei oder mehr Thiolgruppen ein Thiol-Equivalentgewicht von 65 bis 800 g/eq, bevorzugt 65 bis 400 g/eq, insbesondere 80 bis 300 g/eq, auf.

Bevorzugt weist die Verbindung mit zwei oder mehr Thiolgruppen ein Molekulargewicht von 130 bis 1'600 g/mol, insbesondere 130 bis 1'000 g/mol auf.

Bevorzugt ist die Verbindung mit zwei oder mehr Thiolgruppen bei Raumtemperatur flüssig. Insbesondere weist sie eine Viskosität bei 20 °C von 0.01 bis 50 Pa s, bevorzugt 0.05 bis 20 Pa s, besonders bevorzugt 0.05 bis 10 Pa s, insbesondere 0.05 bis 5 Pa s, gemessen mittels Kegel-Platten Viskosimeter mit Kegeldurchmesser 50 mm, Kegelwinkel 1°, Kegelspitze-Platten-Abstand 0.05 mm und Scherrate 10 s⁻¹, für Viskositäten von mehr als 1 Pa s mit Kegeldurchmesser 10 mm. Solche Verbindungen sind bei Umgebungstemperaturen auch ohne Zusatz von Lösemitteln oder Verdünnern gut handhabbar.

Geeignet als Verbindung mit zwei oder mehr Thiolgruppen ist ein Polymercaptan wie insbesondere 1,8-Dimercaptooctan, 1,10-Dimercaptodecan, 1,5-Dimercapto-3-oxapentan, 1,8-Dimercapto-3,6-dioxaoctan (DMDO), 1,5-Dimercapto-3-thiapentan, 1,9-Dimercapto-3,7-dithianonan, 1,2-Dimercaptomethyl-4,5-dimethylbenzol, 1,3-Dimercaptobenzol, 1,4-Dimercaptobenzol, 1,3,5-Trimercaptobenzol, 1,5-Dimercaptonaphthalin, Bis(4-mercaptophenyl)thiamethan, 1,2-Ethandiol-di(2-mercaptoacetat), 1,4-Butandiol-di(2-mercaptoacetat), 1,1,1-Trimethylolpropan-tris(2-mercaptoacetat), Pentaerythritol-tetrakis(2-mercaptoacetat), 1,2-Ethandiol-di(3-mercaptopropionat) (GDMP), 1,4-Butandiol-di(3-mercaptopropionat), 1,1,1-Trimethylolpropan-tris(3-mercaptopropionat) (TMPMP), Pentaerythritol-tetrakis(3-mercaptopropionat) (PETMP), 3-Mercapto-2-hydroxypropylether von propoxyliertem Pentaerythritol, Tris(2-(3-mercaptopropionyloxy)ethyl)isocyanurat oder Mercaptogruppen-haltige Polysulfidpolymere.

Bevorzugt ist die Verbindung mit zwei oder mehr Thiolgruppen ausgewählt aus der Gruppe bestehend aus 1,8-Dimercapto-3,6-dioxaoctan, 1,2-Ethandiol-di(2-mercaptoacetat), 1,4-Butandiol-di(2-mercaptoacetat), 1,1,1-Trimethylolpropan-tris(2-mercaptoacetat), Pentaerythritol-tetrakis(2-mercaptoacetat), 1,2-Ethandiol-di(3-mercaptopropionat), 1,4-Butandiol-di(3-mercaptopropionat), 1,1,1-Trimethylolpropan-tris(3-mercaptopropionat), Pentaerythritol-tetrakis(3-mercaptopropionat), 3-Mercapto-2-hydroxypropylether von propoxyliertem Pentaerythritol mit einem mittleren Thiol-Equivalentgewicht von 180 bis 400 g/eq, Tris(2-(3-mercaptopropionyl-oxy)ethyl)isocyanurat und Mercaptogruppen-haltigen Polysulfidpolymeren mit einem mittleren Thiol-Equivalentgewicht von 250 bis 800 g/eq.

Davon bevorzugt sind Verbindungen mit einem Thiol-Equivalentgewicht von 80 bis 300 g/eq.

Ein kommerzieller 3-Mercapto-2-hydroxypropylether von propoxyliertem Pentaerythritol ist beispielsweise Capcure^{®} 3-800 (von Huntsman). Mercaptogruppen-haltige Polysulfidpolymere sind kommerziell beispielsweise unter dem Handelsnamen Thiokol^{®} von Toray Fine Chemicals erhältlich.

Bevorzugt ist eine Kombination aus einem Aldehydgruppen-haltigem Polymer mit einem mittleren Molekulargewicht Mₙ von mindestens 1'000 g/mol, bevorzugt mindestens 2'000 g/mol, und einem Polymercaptan mit einem Thiol-Equivalentgewicht von 80 bis 300 g/eq. Eine solche härtbare Zusammensetzung ermöglicht eine hohe Dehnbarkeit bei hoher Festigkeit.

In der härtbaren Zusammensetzung liegt das Verhältnis der Anzahl Thiolgruppen zur Anzahl Aldehydgruppen im Bereich von 1.5 bis 4, bevorzugt 1.7 bis 3, insbesondere 1.8 bis 2.5. Dies ermöglicht eine schnelle und störungsfreie Aushärtung zu einem elastischen, nicht-klebrigen Polymer.

In einem bevorzugten Aspekt der Erfindung enthält die härtbare Zusammensetzung mindestens einen Füllstoff ausgewählt aus Aluminiumoxid, Aluminiumhydroxid, Zinkoxid und Zinkhydroxid. Solche Zusammensetzungen zeigen eine zuverlässige und schnelle Aushärtung und nach der Aushärtung eine besonders hohe mechanische Festigkeit und Dehnbarkeit und eine überraschend gute Stabilität gegenüber Hitze und Feuchtigkeit, insbesondere im Vergleich zu sonst üblichen Füllstoffen wie Kaolin, Quarzmehl oder Calciumcarbonat (Kreide). Bevorzugt ist Aluminiumoxid oder Aluminiumhydroxid, insbesondere Aluminiumhydroxid. Aluminiumhydroxid wird auch Aluminiumtrihydrat (ATH) genannt. Es erhöht zusätzlich die thermische Leitfähigkeit und wirkt als Flammschutz, wodurch eine solche Zusammensetzung auch für Anwendungen mit erhöhten Anforderungen an die thermische Leitfähigkeit oder den Flammschutz geeignet sind.

Bevorzugt enthält die härtbare Zusammensetzung bezogen auf die gesamte Zusammensetzung einen Gehalt an Aluminiumoxid, Aluminiumhydroxid, Zinkoxid und/oder Zinkhydroxid von 10 bis 90 Gewichts-%, bevorzugt 20 bis 80 Gewichts-%, insbesondere 25 bis 70 Gewichts-%.

Bevorzugt enthält die Zusammensetzung als Katalysator mindestens eine anorganische oder organische Säure oder eine zu einer Säure hydrolysierbare Verbindung, insbesondere eine organische Carbonsäure wie insbesondere Essigsäure, Benzoesäure, Salicylsäure, 2-Nitrobenzoesäure oder Milchsäure, oder eine organische Sulfonsäure wie insbesondere Methansulfonsäure, p-Toluolsulfonsäure oder p-Dodecylbenzolsulfonsäure, oder ein Sulfonsäureester, Phosphorsäure oder ein Phosphorsäureester, oder Phosphosäure oder ein Phosphonsäureester. Eine solche Zusammensetzung härtet schnell und störungsfrei aus und ermöglicht ausgehärtete Zusammensetzungen mit guter Beständigkeit gegenüber Hitze und Feuchtigkeit.

Die härtbare Zusammensetzung kann zusätzlich weitere Bestandteile enthalten, insbesondere
- Haftvermittler, insbesondere Titanate oder Organoalkoxysilane wie insbesondere Mercaptosilane, Epoxysilane, Vinylsilane, (Meth)acrylsilane, Carbamatosilane, Alkylsilane, S-(Alkylcarbonyl)mercaptosilane oder oligomere Formen dieser Silane;
- weitere Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Magnesiumhydroxide, Kieselsäuren inklusive hochdisperse Kieselsäuren aus Pyrolyseprozessen, industriell hergestellte Russe, Graphit, Metall-Pulver, beispielsweise von Aluminium, Kupfer, Eisen, Silber oder Stahl, PVC-Pulver oder Hohlkugeln;
- Pigmente, insbesondere Titandioxid, Chromoxid, Eisenoxide oder organische Pigmente;
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicar-boxylat, Isophthalate, Trimellitate, Adipate, insbesondere Dioctyladipat (DOA), Azelate, Sebacate, Benzoate, Glycolether, Glycolester, Weichmacher mit Polyetherstruktur, insbesondere Polypropylenoxid-monole, -diole oder -triole, oder Polypropylenoxid-monole, -diole oder -triole mit blockierten Hydroxylgruppen, insbesondere in der Form von Acetatgruppen, sowie organische Sulfonate oder Phosphate, insbesondere Diphenylkresylphosphat (DPK), Polybutene, Polyisobutene oder von natürlichen Fetten oder Ölen abgeleitete Weichmacher, insbesondere epoxidiertes Soja- oder Leinöl, insbesondere Phthalate, hydrierte Phthalate, Adipate oder Weichmacher mit Polyetherstruktur;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe wie Graphen oder Carbon Nanotubes;
- Farbstoffe;
- Lösemittel;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Ricinusöl, hydriertes Ricinusöl, Polyamide, Polyurethane, pyrogene Kieselsäuren oder hydrophob modifizierte Polyoxyethylene;
- Trocknungsmittel, insbesondere Molekularsiebe, Calciumoxid, Mono-Oxazolidine wie Incozol^{®} 2 (von Incorez) oder Orthoameisensäureester;
- nicht-reaktive thermoplastische Polymere, wie Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide; sowie weitere üblicherweise in härtbaren Zusammensetzungen eingesetzte Substanzen.
Solche Zusätze können als Bestandteil der ersten oder der zweiten Komponente vorhanden sein. Mit Mercaptogruppen reaktive Substanzen sind bevorzugt ein Bestandteil der ersten Komponente, mit Aldehydgruppen reaktive Substanzen sind bevorzugt ein Bestandteil der zweiten Komponente.

Bevorzugt enthält die Zusammensetzung als Haftvermittler mindestens ein Mercaptosilan, wie insbesondere 3-Mercaptopropyltrimethoxysilan oder 3-Mercaptopropyltriethoxysilan. Bevorzugt ist das Mercaptosilan ein Bestandteil der zweiten Komponente. Dies ermöglicht Zusammensetzungen mit besonders guten Haftungseigenschaften.

Bevorzugt enthält die Zusammensetzung mindestens einen Weichmacher, insbesondere ausgewählt aus DINP, DIDP, DPHP, DINCH, Bis(2-ethylhexyl)terephthalat, DINT, Bis(2-ethylhexyl)-1,4-cyclohexandicarboxylat, Diisononyl-1,4-cyclo-hexandicarboxylat, DOA, Polypropylenoxidmonolen, Polypropylenoxiddiolen, Polypropylenoxidtriolen, Polypropylenoxidmonolacetaten, Polypropylenoxiddioldiacetaten, Polypropylenoxidtrioltriacetaten und DPK.

Bevorzugt enthält die Zusammensetzung bezogen auf die gesamte Zusammensetzung 5 bis 80 Gewichts-%, insbesondere 10 bis 60 Gewichts-%, Weichmacher. In einer bevorzugten Ausführungsform der Erfindung enthält die härtbare Zusammensetzung Füllstoffe und Weichmacher, insbesondere bezogen auf die gesamte Zusammensetzung 20 bis 90 Gewichts-%, insbesondere 30 bis 80 Gewichts-%, Füllstoffe und 5 bis 60 Gewichts-% Weichmacher.

Die härtbare Zusammensetzung enthält bevorzugt weniger als 10 Gewichts-%, besonders bevorzugt weniger als 5 Gewichts-%, insbesondere weniger als 1 Gewichts-%, flüchtige organische Lösemittel mit einem Siedepunkt bei Normaldruck von weniger als 250 °C bezogen auf die gesamte Zusammensetzung. Eine solche Zusammensetzung verursacht besonders wenig Emissionen.

Die härtbare Zusammensetzung ist bevorzugt nicht wasserbasiert. Sie ist bevorzugt weitgehend frei von Wasser oder enthält nur einen geringen Gehalt an Wasser, insbesondere weniger als 10 Gewichts-%, bevorzugt weniger als 5 Gewichts-%, insbesondere weniger als 2 Gewichts-%, Wasser bezogen auf die gesamte Zusammensetzung. Eine solche Zusammensetzung härtet unabhängig von der Umgebungsfeuchte schnell aus, kann in dicken Schichten und/oder zwischen wasserdichten Substraten eingesetzt werden und zeigt kaum Schwund bei der Aushärtung.

Die härtbare Zusammensetzung enthält bevorzugt weniger als 10 Gewichts-%, besonders bevorzugt weniger als 5 Gewichts-%, insbesondere weniger als 1 Gewichts-%, Silikonverbindungen. Eine solche Zusammensetzung ist gut überstreichbar und zeigt besonders gute Haftungseigenschaften.

Die Konsistenz der ersten und der zweiten Komponenten der härtbaren Zusammensetzung ist geeigneter Weise so, dass die Komponenten bei Umgebungsbedingungen mit einfachen Verfahren gut miteinander vermischt werden können. Dazu sind insbesondere flüssige oder pastöse Komponenten geeignet.

Die erste und die zweite Komponente der härtbaren Zusammensetzung werden getrennt voneinander hergestellt. Dabei werden die Bestandteile der jeweiligen Komponente miteinander vermischt, so dass eine makroskopisch homogene Masse entsteht. Jede Komponente wird in einem separaten Gebinde gelagert. Geeignete Gebinde sind insbesondere ein Fass, ein Container, ein Hobbock, ein Eimer, ein Kanister, eine Büchse, ein Beutel, ein Schlauchbeutel, eine Kartusche oder eine Tube. Die Komponenten sind lagerstabil.

Zur Anwendung der härtbaren Zusammensetzung werden die beiden Komponenten und gegebenenfalls vorhandene weitere Komponenten kurz vor oder während der Applikation miteinander vermischt.

Das Mischungsverhältnis wird dabei so gewählt, dass das Verhältnis der Anzahl Thiolgruppen zur Anzahl Aldehydgruppen im bevorzugten Bereich liegt. In Gewichtsteilen liegt das Mischungsverhältnis zwischen der ersten und der zweiten Komponente typischerweise im Bereich von etwa 100:1 bis 1:10, bevorzugt 50:1 bis 1:5, insbesondere 10:1 bis 1:2.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und den damit verbundenen Anstieg der Viskosität zu Störungen wie beispielsweise einem ungenügenden Verlauf oder einer verlangsamten oder unvollständigen Haftung zum Substrat kommen kann. Insbesondere soll die Offenzeit der Zusammensetzung während der Applikation nicht überschritten werden.

Als "Offenzeit" wird dabei die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, insbesondere bei einer Temperatur im Bereich von -5 bis 50°C, insbesondere 0 bis 40°C.

Mit dem Vermischen der beiden Komponenten beginnt die Zusammensetzung durch die einsetzende chemische Reaktion auszuhärten. Dabei reagieren die Aldehydgruppen mit den Thiolgruppen, wobei hauptsächlich Thioacetalgruppen entstehen. Als Folge dieser Vernetzungsreaktionen härtet die Zusammensetzung zu einem nicht-klebrigen elastischen Polymer aus.

Die Aushärtung erfolgt bevorzugt bei Umgebungstemperatur, insbesondere bei einer Temperatur im Bereich von -5 bis 50°C, insbesondere 0 bis 40°C.

Ein weiterer Gegenstand der Erfindung ist die ausgehärtete Zusammensetzung, erhalten aus der härtbaren Zusammensetzung nach dem Vermischen der beiden Komponenten.

Bevorzugt ist die ausgehärtete Zusammensetzung elastisch und weist eine hohe Festigkeit bei hoher Dehnbarkeit auf.

Bevorzugt weist die ausgehärtete Zusammensetzung eine Zugfestigkeit, bestimmt gemäss DIN EN 53504 wie in den Beispielen beschrieben, von mindestens 1 MPa, bevorzugt mindestens 1.5 MPa, auf.

Bevorzugt weist die ausgehärtete Zusammensetzung eine Bruchdehnung, bestimmt gemäss DIN EN 53504 wie in den Beispielen beschrieben, von mindestens 50 %, bevorzugt mindestens 100 %, insbesondere mindestens 150 %, auf. Bevorzugt weist die ausgehärtete Zusammensetzung eine Shore A-Härte, bestimmt gemäss DIN 53505 wie in den Beispielen beschrieben, im Bereich von 10 bis 90, bevorzugt 20 bis 85, insbesondere 30 bis 80, auf.

Weiterhin verfügt die ausgehärtete Zusammensetzung über eine gute Beständigkeit gegen Hitze und Wasser. Bevorzugt zeigt die ausgehärtete Zusammensetzung auch nach einer Lagerung während 7 Tagen bei 100 °C oder bei 70 °C und 100 % relativer Feuchtigkeit eine hohe Festigkeit bei hoher Dehnbarkeit, und die Shore A-Härte verbleibt im bevorzugten Bereich.

Weiterhin verfügt die ausgehärtete Zusammensetzung über gute Haftungseigenschaften auf üblichen Substraten wie insbesondere Glas, Aluminium, Beton oder Holz.

Die härtbare Zusammensetzung eignet sich für eine Vielzahl von Verwendungen. Sie kann insbesondere verwendet werden als Klebstoff, Dichtstoff, Beschichtung, Giessharz oder Spachtelmasse.

Ein weiterer Gegenstand der Erfindung ist die Verwendung der härtbaren Zusammensetzung als elastischer Klebstoff, elastischer Dichtstoff oder elastische Beschichtung, wobei die erste und die zweiten und gegebenenfalls vorhandenen weiteren Komponenten miteinander vermischt werden und die vermischte Zusammensetzung im flüssigen Zustand auf mindestens ein Substrat appliziert wird.

Geeignete Substrate sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isolierschäume, insbesondere aus EPS, XPS, PUR, PIR, Steinwolle, Glaswolle, Aerogel oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Verwendung der härtbaren Zusammensetzung wird ein Artikel erhalten. Der Artikel ist insbesondere mit der Zusammensetzung verklebt, abgedichtet oder beschichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen. Viskositäten von weniger als 100 mPa·s wurden mit einer Scherrate von 100 s⁻¹ gemessen. Viskositäten von mehr als 500 Pa s wurden mit einer Scherrate von 2 s⁻¹ gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

### Herstellung von Isocyanatgruppen-haltigen Polymeren:

### Polymer P-1:

780 g Ethylenoxid-terminiertes Polyoxypropylentriol (Desmophen^{®} 5031 BT, OH-Zahl 28.0 mg KOH/g, OH-Funktionalität ca. 2.3, von Covestro) und 303 g Isophorondiisocyanat (Vestanat^{®} IPDI, von Evonik) wurden bei 80 °C nach bekanntem Verfahren zu einer Reaktionsmischung mit einem NCO-Gehalt von 9.1 Gewichts-% umgesetzt. Anschliessend wurden die flüchtigen Bestandteile, insbesondere nicht umgesetztes Isophorondiisocyanat, in einem Kurzwegverdampfer destillativ entfernt (Manteltemperatur 160 °C, Druck 0.1 bis 0.005 mbar), wobei ein Polymer mit einem NCO-Gehalt von 1.84 Gewichts-% einer Viskosität von 8.2 Pa s bei 20 °C und einem Gehalt an monomerem Isophorondiisocyanat von 0.02 Gewichts-% erhalten wurde.

### Polymer P-2:

818 g Polyoxypropylendiol (Acclaim^{®} 4200, OH-Zahl 28.5 mg KOH/g, von Covestro) und 227 g Isophorondiisocyanat (Vestanat^{®} IPDI, von Evonik) wurden bei 80 °C nach bekanntem Verfahren zu einer Reaktionsmischung mit einem NCO-Gehalt von 6.6 Gewichts-% umgesetzt. Anschliessend wurden die flüchtigen Bestandteile, insbesondere nicht umgesetztes Isophorondiisocyanat, in einem Kurzwegverdampfer destillativ entfernt (Manteltemperatur 160 °C, Druck 0.1 bis 0.005 mbar), wobei ein Polymer mit einem NCO-Gehalt von 1.91 Gewichts-% einer Viskosität von 6.5 Pa s bei 20 °C-und einem Gehalt an monomerem Isophorondiisocyanat von 0.03 Gewichts-% erhalten wurde.

### Polymer P-3:

725 g Ethylenoxid-terminiertes Polyoxypropylentriol (Desmophen^{®} 5031 BT, OH-Zahl 28.0 mg KOH/g, OH-Funktionalität ca. 2.3, von Covestro) und 275 g 4,4'-Diphenylmethandiisocyanat (Desmodur^{®} 44 MC L, von Covestro) wurden bei 80 °C nach bekanntem Verfahren zu einer Reaktionsmischung mit einem NCO-Gehalt von 7.6 Gewichts-% umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar, Kondensationstemperatur 47°C), wobei ein Polymer mit einem NCO-Gehalt von 1.68 Gewichts-% einer Viskosität von 19 Pa s bei 20 °C und einen Gehalt an monomerem 4,4'-Diphenylmethandiisocyanat von 0.04 Gewichts-% erhalten wurde.

### Polymer P-4:

727.0 g Polyoxypropylendiol (Acclaim^{®} 4200, OH-Zahl 28 mg KOH/g, von Covestro) und 273.0 g 4,4'-Diphenylmethandiisocyanat (Desmodur^{®} 44 MC L, von Covestro) wurden bei 80 °C nachbekanntem Verfahren zu einer Reaktionsmischung mit einem NCO-Gehalt von 7.6 Gewichts-% umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar, Kondensationstemperatur 47°C), wobei ein Polymer mit einem NCO-Gehalt von 1.7 Gewichts-%, einer Viskosität von 15.2 Pa s bei 20 °C und einen Gehalt an monomerem 4,4'-Diphenylmethandiisocyanat von 0.08 Gewichts-% erhalten wurde.

### Polymer P-5:

600 g Polyoxypropylendiol (Voranol^{®} 1010 L, OH-Zahl 112 mg KOH/g, von Dow) und 533.3 g Isophorondiisocyanat (Vestanat^{®} IPDI, von Evonik) wurden bei 80 °C nach bekanntem Verfahren zu einer Reaktionsmischung mit einem NCO-Gehalt von 15.6 Gewichts-% umgesetzt. Anschliessend wurden die flüchtigen Bestandteile, insbesondere nicht umgesetztes Isophorondiisocyanat, in einem Kurzwegverdampfer destillativ entfernt (Manteltemperatur 160 °C, Druck 0.1 bis 0.005 mbar), wobei ein Polymer mit einem NCO-Gehalt von 5.18 Gewichts-%, einer Viskosität von 21.8 Pa s bei 20 °C und einem Gehalt an monomerem Isophorondiisocyanat von 0.03 Gewichts-% erhalten wurde.

### Herstellung von Aldehydgruppen-haltigen Polymeren:

### Polymere A-1 bis A-6:

Die in Tabelle 1 angegebenen Mengen des angegebenen Isocyanatgruppen-haltigen Polymers wurden in Gegenwart von 0.02 Gewichts-% Dibutylzinndilaurat unter Ausschluss von Feuchtigkeit bei 110 °C mit den angegebenen Mengen des entsprechenden Hydroxyaldehyds umgesetzt, bis mittels IR-Spektroskopie keine Isocyanatgruppen mehr nachweisbar waren. Im Fall der Polymere mit aromatischen Isocyanatgruppen **P-3** und **P-4** erfolgte die Umsetzung ohne Dibutylzinndilaurat und bei 80 °C.

Die Eigenschaften der Polymere **A-1** bis **A-6** sind in Tabelle 1 angegeben.

Vom **Polymer A-1** wurde das mittlere Molekulargewicht Mₙ mittels Gelpermeationschromatographie (GPC) gegen Polystyrol (474 bis 2'520'000 g/mol) als Standard mit Tetrahydrofuran als mobile Phase und Brechungsindex-Detektor bestimmt. Das mittlere Molekulargewicht Mₙ betrug 6'100 g/mol.

**Tabelle 1: Herstellung und Eigenschaften der Polymere A-1 bis A-6, Mengen in Gewichtsteilen.**

| **Polymer** | **A-1** | **A-2** | **A-3** | **A-4** | **A-5** | **A-6** |
|---|---|---|---|---|---|---|
| Polymer **P-1** | 500.0 | - | - | - | 500.0 | 500.0 |
| Polymer **P-2** | - | 500.0 | - | - | - | - |
| Polymer **P-3** | - | - | 500.0 | - | - | - |
| Polymer **P-4** | - | - | - | 500.0 | - | - |
| 5-Hydroxymethylfurfural | 27.7 | 28.9 | 25.5 | 25.5 | - | - |
| 2-(2-Hydroxyethoxy)benzaldehyd | - | - | - | - | 37.4 | - |
| Vanillin-Dialdehyd ¹ | - | - | - | - | - | 78.9 |
| Viskosität (20°C) [Pa·s] | 63.7 | 33.2 | 187.1 | 146.4 | 138.3 | 1050 |
| Aldehyd-Equivalentgewicht [g/eq] | 2400 | 2310 | 2600 | 2600 | 2451 | 1322 |

| | | | | | | |
|---|---|---|---|---|---|---|
| ¹ 4,4'-(2-Hydroxypropan-1,3-diyl)-bis(oxy)-bis(3-methoxybenzaldehyd), hergestellt aus 2 mol Vanillin und 1 mol Epichlorhydrin | | | | | | |

### Verwendete Verbindungen mit Thiolgruppen:

- GDMP: Ethylenglykoldi(3-mercaptopropionat), 123.5 g/eq SH (Thiocure^{®} GDMP, von Bruno Bock GmbH)
- TMPMP: 1,1,1-Trimethylolpropan-tris(3-mercaptopropionat), 138 g/eq SH (Thiocure^{®} TMPMP, von Bruno Bock GmbH)
- PETMP: Pentaerythritol-tetrakis(3-mercaptopropionat), 127 g/eq SH (Thiocure^{®} PETMP, von Bruno Bock GmbH)
- DMDO: 1,8-Dimercapto-3,6-dioxaoctan, 91 g/eq SH
- Capcure^{®} 3-800: 3-Mercapto-2-hydroxypropylether von propoxyliertem Pentaerythritol, ca. 267 g/eq SH (von Huntsman)
- Thiokol^{®} LP-33: lineares Polysulfid Polymer mit Mercapto-Endgruppen, 574 g/eq SH (von Toray Fine Chemicals)
- Thiokol^{®} LP-2: lineares Polysulfid Polymer mit Mercapto-Endgruppen, 1886 g/eq SH (von Toray Fine Chemicals)
- Polymer SH-1: Mercaptogruppen-haltiges Polymer aus der Umsetzung von Polymer **P-1** und 2-Thioethanol, ca. 2307 g/eq SH, hergestellt wie nachfolgend beschrieben
- Mercaptosilan: 3-Mercaptopropyltrimethoxysilan

### Polymer SH-1:

250.0 g **Polymer P-1** mit einem NCO-Gehalt von 1.84 Gewichts-%, hergestellt wie vorgängig beschrieben, wurden in Gegenwart von 1.0 g Dibutylzinndilaurat unter Ausschluss von Feuchtigkeit bei 80 °C mit 8.8 g 2-Mercaptoethanol umgesetzt, bis mittels IR-Spektroskopie keine Isocyanatgruppen mehr nachweisbar waren. Das erhaltene Polymer wies ein theoretisches Mercapto-Equivalentgewicht von 2307 g/eq auf.

### Herstellung von härtbaren Zusammensetzungen:

### Beispiele Z-1 bis Z-21

Für jedes Beispiel wurden die in den Tabellen 2 bis 6 angegebenen Inhaltsstoffe der ersten Komponente **(K1)** in den angegebenen Mengen (in Gewichtsteilen) mittels eines Zentrifugalmischers (SpeedMixer^{™} DAC 150, FlackTek Inc.) vermischt und in einem verschlossenen Gebinde aufbewahrt.

Ebenso wurden die in den Tabellen 2 bis 5 angegebenen Inhaltsstoffe der zweiten Komponente **(K2)** verarbeitet und aufbewahrt.

Als "ATH" wurde Aluminiumhydroxid (Martinal^{®} OL-104, von Martinswerk) eingesetzt.

Als "Russ" wurde Monarch^{®} 570 (von Cabot) eingesetzt.

Als "Kaolin calciniert" wurde Satintone^{®} W (von BASF) eingesetzt.

Als "Quarzmehl" wurde eine Korngrösse von 0 bis 75 µm eingesetzt.

Als "Kreide" wurde Omyacarb^{®} 5 GU (von Omya) eingesetzt.

Anschliessend wurden die beiden Komponenten jeder Zusammensetzung mittels des Zentrifugalmischers zu einer homogenen Flüssigkeit verarbeitet und diese unverzüglich folgendermassen geprüft:
Die **Gelierzeit** wurde bestimmt, indem eine frisch vermischte Menge von ca. 3 g im Normklima mit einem Spatel in regelmässigen Abständen bewegt wurde, bis die Masse gelierte.

Zur Bestimmung der mechanischen Eigenschaften wurde die vermischte Zusammensetzung auf einem silikonbeschichteten Trennpapier zu einem Film von 2 mm Dicke aufgebracht, dieser während 7 Tagen im Normklima gelagert, einige hantelförmige Prüfkörper mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit, Bruchdehnung, E-Modul 5%** (bei 0.5-5% Dehnung) und **E-Modul 50%** (bei 0.5-50% Dehnung) geprüft. Weiter wurden einige Prüfkörper zur Bestimmung der **Weiterreissfestigkeit** ausgestanzt und gemäss DIN ISO 34-1, Verfahren B (winkelförmiger Prüfkörper) bei einer Zuggeschwindigkeit von 500 mm/min geprüft. Diese Resultate sind mit dem Zusatz **"7d NK"** bezeichnet.

Zur Bestimmung der Hitze- und Hydrolysestabilität wurden bei einigen Beispielen weitere hantelförmige Prüfkörper nach 7 Tagen Aushärtung im Normklima zusätzlich während 7 Tagen bei 70 °C und 100 % relativer Feuchtigkeit gefolgt von 24 Stunden im Normklima gelagert und davon die **Zugfestigkeit, Bruchdehnung, E-Modul 5%** und **E-Modul 50%** bestimmt. Diese Resultate sind mit dem Zusatz **"+7d 70/100"** versehen.

Die **Shore A**-Härte wurde nach DIN 53505 an während 7 Tagen im Normklima gehärteten Prüfkörpern bestimmt. Diese Resultate sind mit dem Zusatz **"7d NK"** versehen. Zur Bestimmung der Hitze- und Hydrolysestabilität wurden weitere Shore A-Prüfkörper nach 7 Tagen Aushärtung im Normklima entweder zusätzlich während 7 Tagen bei 70 °C und 100 % relativer Feuchtigkeit gelagert oder zusätzlich während 7 Tagen in einem Umluftofen bei 100 °C gelagert und nach Abkühlen auf Raumtemperatur jeweils wie beschrieben die Shore A-Härte bestimmt. Diese Resultate sind mit dem Zusatz **"+7d 70/100"** bzw. **"+7d 100°C"** versehen.

Als Mass für die Festigkeit einer Klebeverbindung wurde von einigen Zusammensetzungen die **Zugscherfestigkeit** auf Glas bestimmt. Dazu wurden Verbundkörper hergestellt, indem zwei mit Isopropanol entfettete und mit Sika^{®} Aktivator-205 (von Sika Schweiz) vorbehandelte Glasplatten so verklebt wurden, dass die überlappende Klebeverbindung eine Dimension von 12 x 25 mm und eine Dicke von 4 mm aufwies und die Glasplatten an den Kopfenden vorstanden. Nach einer Lagerung der Verbundkörper während 7 d im Normklima wurde die Zugscherfestigkeit nach DIN EN 1465 bei einer Zuggeschwindigkeit von 20 mm/min geprüft. Anschliessend wurde das **Bruchbild** beurteilt auf AF (Adhäsivbruch bzw. adhesive failure) oder CF (Kohäsivbruch bzw. cohesive failure). Ohne weitere Angaben wurde das in der Tabelle angegebene Bruchbild auf 90 bis 100 % der Bruchfläche beobachtet.

Die Resultate sind in den Tabellen 2 bis 6 angegeben.

Die mit **"(Ref.)"** bezeichneten Beispiele sind nicht erfindungsgemässe Vergleichsbeispiele.

Bei der Aushärtung der erfindungsgemässen Beispiele während 7 Tagen im Normklima entstand, jeweils ein nichtklebriges, elastisches Material.

**Tabelle 2: Zusammensetzung und Eigenschaften von Z-1 bis Z-6.**

| **Beispiel** | **Z-1** | **Z-2** | **Z-3** | **Z-4** | **Z-5** | **Z-6** |
|---|---|---|---|---|---|---|
| **Komponente K1:** | | | | | | |
| Polymer **A-1** | 30.0 | 30.0 | 30.0 | 30.0 | 27.0 | 30.0 |
| Diisodecylphthalat | 20.0 | 20.0 | 20.0 | 20.0 | 20.8 | 20.0 |
| ATH | 30.0 | 30.0 | 30.0 | 30.0 | 30.2 | 30.0 |
| Russ | 10.0 | 10.0 | 10.0 | 10.0 | 10.5 | 10.0 |

| **Komponente K2:** | | | | | | |
|---|---|---|---|---|---|---|
| GDMP | 2.8 | - | - | - | - | - |
| TMPMP | - | 3.9 | - | - | - | - |
| PETMP | - | - | 3.6 | - | - | - |
| DMDO | - | - | - | 2.3 | - | - |
| Capcure^{®} 3-800 | - | - | - | - | 5.4 | - |
| Thiokol^{®} LP-33 | - | - | - | - | - | 13.4 |
| Mercaptosilan | 0.6 | 0.9 | 0.9 | 0.9 | 0.6 | 1.0 |
| pDBSA ¹ | 0.25 | 0.25 | 0.25 | 0.3 | 0.2 | 0.3 |
| Gelierzeit [min] | 90 | 25 | 20 | 8 | 25 | 18 |

| **7d NK:** | | | | | | |
|---|---|---|---|---|---|---|
| Zugfestigkeit [MPa] | 1.5 | 2.0 | 2.2 | 1.5 | 1.8 | 1.0 |
| Bruchdehnung [%] | 195 | 100 | 90 | 175 | 130 | 115 |
| E-Modul 5% [MPa] | 1.7 | 4.3 | 4.9 | 2.0 | 2.6 | 1.7 |
| E-Modul 50% [MPa] | 1.1 | 1.6 | 1.6 | 1.2 | 1.5 | 1.1 |
| Weiterreissfestigkeit [N/mm] | 3.1 | 3.2 | 3.1 | 3.2 | 3.1 | 2.2 |

| **+ 7d 70/100:** | | | | | | |
|---|---|---|---|---|---|---|
| Zugfestigkeit [MPa] | 1.7 | 2.2 | 2.3 | 1.3 | 2.2 | 0.9 |
| Bruchdehnung [%] | 150 | 77 | 78 | 180 | 110 | 100 |
| E-Modul 5% [MPa] | 1.7 | 3.6 | 4.5 | 1.5 | 2.8 | 1.0 |
| E-Modul 50% [MPa] | 1.7 | 3.3 | 3.1 | 1.3 | 2.6 | 0.9 |
| Shore A (7d NK) | 48 | 61 | 65 | 45 | 53 | 44 |
| (+ 7d 70/100) | 44 | 60 | 63 | 48 | 55 | 43 |
| (+ 7d 100°C) | 54 | 64 | 65 | 54 | 60 | 48 |
| Zugscherfestigkeit (Glas) [MPa] | 1.2 | 1.1 | 0.9 | 1.2 | 1.1 | 0.6 |
| Bruchbild | CF | CF | CF | CF | CF | AF |

| | | | | | | |
|---|---|---|---|---|---|---|
| ¹ p-Dodecylbenzolsulfonsäure | | | | | | |

**Tabelle 3: Zusammensetzung und Eigenschaften von Z-7 bis Z-11.**

| **Beispiel** | **Z-7** | **Z-8** | **Z-9** | **Z-10** | **Z-11** |
|---|---|---|---|---|---|
| **Komponente K1:** | | | | | |
| Polymer | **A-2** | **A-3** | **A-4** | **A-5** | **A-6** |
| | 30.0 | 30.0 | 30.0 | 30.0 | 30.0 |
| Diisodecylphthalat | 20.0 | 20.0 | 20.0 | 20.0 | 20.0 |
| ATH | 30.0 | 30.0 | 30.0 | 30.0 | 30.0 |
| Russ | 10.0 | 10.0 | 10.0 | 10.0 | 10.0 |

| **Komponente K2:** | | | | | |
|---|---|---|---|---|---|
| DMDO | 2.35 | 2.07 | 2.10 | 2.02 | 4.13 |
| Mercaptosilan | 0.9 | 0.9 | 0.9 | 0.43 | 0.9 |
| pDBSA ¹ | 0.22 | 0.22 | 0.20 | 0.36 | 0.30 |
| Gelierzeit [min] | 30 | 8 | 65 | 60 | 20 |

| **7d NK:** | | | | | |
|---|---|---|---|---|---|
| Zugfestigkeit [MPa] | 1.4 | 2.8 | 2.1 | 1.3 | 3.4 |
| Bruchdehnung [%] | 190 | 255 | 380 | 235 | 145 |
| E-Modul 5% [MPa] | 1.6 | 2.3 | 0.9 | 0.8 | 4.5 |
| E-Modul 50% [MPa] | 1.1 | 0.9 | 0.8 | 0.9 | 1.7 |
| Weiterreissfestigkeit [N/mm] | 2.7 | 3.5 | 5.8 | n.b. | 3.1 |
| Shore A (7d NK) | 43 | 48 | 33 | 35 | 48 |
| (+ 7d 70/100) | 44 | 40 | 27 | n.b. | n.b. |
| (+ 7d 100°C) | 48 | n.b. | n.b. | n.b. | n.b. |
| Zugscherfestigkeit (Glas) [MPa] | 1.2 | 1.3 | 1.6 | 1.2 | 1.5 |
| Bruchbild | CF | CF | CF | CF | AF/CF 50/50 |

| | | | | | |
|---|---|---|---|---|---|
| ¹ p-Dodecylbenzolsulfonsäure «n.b.» steht für «nicht bestimmt» | | | | | |

**Tabelle 4: Zusammensetzung und Eigenschaften von Z-1 und Z-12 bis Z-15.**

| **Beispiel** | **Z-1** | **Z-12** | **Z-13** | **Z-14** | **Z-15** |
|---|---|---|---|---|---|
| **Komponente K1:** | | | | | |
| Polymer **A-1** | 30.0 | 30.0 | 30.0 | 30.0 | 30.0 |
| Diisodecylphthalat | 20.0 | 20.0 | 20.0 | 20.0 | - |
| ATH | 30.0 | - | - | - | - |
| Kaolin calciniert | - | 30.0 | - | - | - |
| Quarzmehl | - | - | 30.0 | - | - |
| Kreide | - | - | - | 30.0 | - |
| Russ | 10.0 | 10.0 | 10.0 | 10.0 | - |

| **Komponente K2:** | | | | | |
|---|---|---|---|---|---|
| GDMP | 2.8 | 2.8 | 2.8 | 2.8 | 2.8 |
| Mercaptosilan | 0.6 | 0.5 | 0.5 | 0.5 | 0.5 |
| pDBSA ¹ | 0.25 | 0.2 | 0.2 | 0.4 | 0.1 |
| Gelierzeit [min] | 90 | 20 | 6 | 6 | n.b. |

| **7d NK:** | | | | | |
|---|---|---|---|---|---|
| Zugfestigkeit [MPa] | 1.5 | 3.7 | 1.54 | 1.1 | 0.9 |
| Bruchdehnung [%] | 195 | 90 | 67 | 304 | 50 |
| E-Modul 5% [MPa] | 1.7 | 3.4 | 2.4 | 0.5 | 1.9 |
| E-Modul 50% [MPa] | 1.1 | 3.7 | 2.5 | 0.5 | 1.5 |
| Weiterreissfestigkeit [N/mm] | 3.1 | 3.3 | 3.1 | 3.0 | 1.4 |

| **+ 7d 70/100:** | | | | | |
|---|---|---|---|---|---|
| Zugfestigkeit [MPa] | 1.7 | 0.9 | 0.7 | 1.3 | 0.9 |
| Bruchdehnung [%] | 150 | 137 | 113 | 160 | 55 |
| E-Modul 5% [MPa] | 1.7 | 0.73 | 0.43 | 1.12 | 1.7 |
| E-Modul 50% [MPa] | 1.7 | 0.66 | 0.74 | 1.07 | 1.4 |
| Shore A (7d NK) | 48 | 61 | 52 | 17 | 55 |
| (+ 7d 70/100) | 44 | 42 | 37 | 31 | 39 |
| (+ 7d 100°C) | 54 | 64 | 56 | 54 | 42 |
| Zugscherfestigkeit (Glas) [MPa] | 1.2 | 1.8 | 1.1 | 0.7 | n.b. |
| Bruchbild | CF | CF | CF | CF | |

| | | | | | |
|---|---|---|---|---|---|
| ¹ p-Dodecylbenzolsulfonsäure «n.b.» steht für «nicht bestimmt» | | | | | |

**Tabelle 5: Zusammensetzung und Eigenschaften von Z-4 und Z-16 bis Z-18.**

| **Beispiel** | **Z-4** | **Z-16** | **Z-17** | **Z-18** |
|---|---|---|---|---|
| **Komponente K1:** | | | | |
| Polymer **A-1** | 30.0 | 30.0 | 30.0 | 30.0 |
| Diisodecylphthalat | 20.0 | 20.0 | 20.0 | - |
| ATH | 30.0 | - | - | - |
| Kaolin calciniert | - | 30.0 | - | - |
| Quarzmehl | - | - | 30.0 | - |
| Russ | 10.0 | 10.0 | 10.0 | - |

| **Komponente K2:** | | | | |
|---|---|---|---|---|
| DMDO | 2.3 | 2.3 | 2.3 | 2.3 |
| Mercaptosilan | 0.9 | 0.9 | 0.9 | 0.9 |
| pDBSA ¹ | 0.3 | 0.15 | 0.2 | 0.15 |
| Gelierzeit [min] | 8 | 10 | 13 | 10 |

| **7d NK:** | | | | |
|---|---|---|---|---|
| Zugfestigkeit [MPa] | 1.5 | 1.9 | 1.4 | 0.9 |
| Bruchdehnung [%] | 175 | 90 | 175 | 60 |
| E-Modul 5% [MPa] | 2.0 | 2.4 | 1.8 | 1.5 |
| E-Modul 50% [MPa] | 1.2 | 3.1 | 1.0 | 1.3 |
| Weiterreissfestigkeit [N/mm] | 3.2 | 3.0 | n.b. | 1.2 |

| **+ 7d 70/100:** | | | | |
|---|---|---|---|---|
| Zugfestigkeit [MPa] | 1.3 | 0.9² | 1.0² | 0.9 |
| Bruchdehnung [%] | 180 | 105 | 190 | 60 |
| E-Modul 5% [MPa] | 1.5 | 0.8 | 0.5 | 1.6 |
| E-Modul 50% [MPa] | 1.3 | 1.0 | 0.4 | 1.3 |
| Shore A (7d NK) | 45 | 55 | 47 | 45 |
| (+ 7d 70/100) | 48 | 38 | 24 | 42 |
| (+ 7d 100°C) | 54 | 60 | n.b. | 45 |

| | | | | |
|---|---|---|---|---|
| ¹ p-Dodecylbenzolsulfonsäure ² klebrige Oberfläche | | | | |

**Tabelle 6: Zusammensetzung und Eigenschaften von Z-19 bis Z-21.**

| **Beispiel** | **Z-19 (Ref.)** | **Z-20 (Ref.)** | **Z-21 (Ref.)** |
|---|---|---|---|
| **Komponente K1:** | | | |
| Terephthaldehyd ¹ | 0.6 | 1.9 | 0.7 |
| Diisodecylphthalat | 15.0 | 15.0 | 15.0 |
| **Komponente K2:** | | | |
| Polymer **SH-1** | 30.0 | - | - |
| Thiokol^{®} LP-33 | - | 30.0 | - |
| Thiokol^{®} LP-2 | - | - | 30.0 |
| Diisodecylphthalat | 5.0 | 5.0 | 5.0 |
| ATH | 30.0 | 30.0 | 30.0 |
| Russ | 10.0 | 10.0 | 10.0 |
| Mercaptosilan | 0.9 | 0.5 | 0.5 |
| pDBSA ² | 0.9 | 0.9 | 0.9 |
| Gelierzeit [min] | 100 | > 300 | > 300 |
| **7d NK:** | | | |
| Zugfestigkeit [MPa] | 1.0 ³ | | |
| Bruchdehnung [%] | 255 | n.m.⁵ | n.m.⁵ |
| E-Modul 5% [MPa] | 0.75 | | |
| E-Modul 50% [MPa] | 0.56 | | |
| Weiterreissfestigkeit [N/mm] | 2.8 | n.m.⁵ | n.m.⁵ |
| **+ 7d 70/100:** | | | |
| Zugfestigkeit [MPa] | | | |
| Bruchdehnung [%] | n.m.3 | n.m.⁵ | n.m.⁵ |
| E-Modul 5% [MPa] | | | |
| E-Modul 50% [MPa] | | | |
| Shore A (7d NK) | 20 | | |
| (+ 7d 70/100) | n.m.4 | n.m.⁵ | n.m.⁵ |
| (+ 7d 100°C) | n.m.4 | | |
| Zugscherfestigkeit (Glas) [MPa] | 0.4 | n.m.⁵ | n.m.⁵ |
| Bruchbild | AF | | |

| | | | |
|---|---|---|---|
| ¹ gelöst in erwärmtem Diisodecylphthalat ² p-Dodecylbenzolsulfonsäure ³ klebrige Oberfläche ⁴ nicht messbar (zersetzt) ⁵ nicht messbar (keine Aushärtung, krümelige Masse) | | | |

## Patentansprüche

1. Härtbare Zusammensetzung umfassend
- eine erste Komponente enthaltend mindestens ein Aldehydgruppen-haltiges Polymer mit Kohlenwasserstoff-, Polyether- oder Polyestergerüst, und
- eine zweite Komponente enthaltend mindestens eine Verbindung mit zwei oder mehr Thiolgruppen.

2. Zusammensetzung gemäss Anspruch 1, **dadurch gekennzeichnet, dass** das Aldehydgruppen-haltige Polymer bei Raumtemperatur flüssig ist.

3. Zusammensetzung gemäss einem der Ansprüche 1 oder 2, **dadurch gekennzeichnet, dass** das Aldehydgruppen-haltige Polymer ein mittleres Molekulargewicht Mₙ von 500 bis 20'000 g/mol, bevorzugt 1'000 bis 15'000 g/mol, besonders bevorzugt 2'000 bis 10'000 g/mol, insbesondere 3'000 bis 8'000 g/mol, aufweist.

4. Zusammensetzung gemäss einem der Ansprüche 1 bis 3, **dadurch gekennzeichnet, dass** das Aldehydgruppen-haltige Polymer eine mittlere Aldehyd-Funktionalität von 1.6 bis 6, bevorzugt 1.7 bis 4, besonders bevorzugt 1.8 bis 3, aufweist.

5. Zusammensetzung gemäss einem der Ansprüche 1 bis 4, **dadurch gekennzeichnet, dass** die Aldehydgruppen des Aldehydgruppen-haltigen Polymers jeweils an einen aromatischen oder heteroaromatischen Ring gebunden sind.

6. Zusammensetzung gemäss einem der Ansprüche 1 bis 5, **dadurch gekennzeichnet, dass** das Aldehydgruppen-haltige Polymer ein Reaktionsprodukt aus der Umsetzung von mindestens einem Hydroxyaldehyd mit mindestens einem Isocyanatgruppen-haltigen Polymer ist.

7. Zusammensetzung gemäss einem der Ansprüche 1 bis 6, **dadurch gekennzeichnet, dass** die Verbindung mit zwei oder mehr Thiolgruppen 2 bis 10, bevorzugt 2 bis 6, insbesondere 2 bis 4, Thiolgruppen aufweist.

8. Zusammensetzung gemäss einem der Ansprüche 1 bis 7, **dadurch gekennzeichnet, dass** die Verbindung mit zwei oder mehr Thiolgruppen ein Thiol-Equivalentgewicht von 65 bis 800 g/eq, bevorzugt 65 bis 400 g/eq, insbesondere 80 bis 300 g/eq, aufweist.

9. Zusammensetzung gemäss einem der Ansprüche 1 bis 8, **dadurch gekennzeichnet, dass** die Verbindung mit zwei oder mehr Thiolgruppen ausgewählt ist aus der Gruppe bestehend aus 1,8-Dimercapto-3,6-dioxaoctan, 1,2-Ethandiol-di(2-mercaptoacetat), 1,4-Butandiol-di(2-mercaptoacetat), 1,1,1-Trimethylolpropan-tris(2-mercaptoacetat), Pentaerythritol-tetrakis(2-mercaptoacetat), 1,2-Ethandiol-di(3-mercaptopropionat), 1,4-Butandiol-di(3-mercaptopropionat), 1,1,1-Trimethylolpropan-tris(3-mercaptopropionat), Pentaerythritol-tetrakis(3-mercaptopropionat), 3-Mercapto-2-hydroxypropylether von propoxyliertem Pentaerythritol mit einem mittleren Thiol-Equivalentgewicht von 180 bis 400 g/eq, Tris(2-(3-mercaptopropionyloxy)-ethyl)isocyanurat und Mercaptogruppen-haltigen Polysulfidpolymeren mit einem mittleren Thiol-Equivalentgewicht von 250 bis 800 g/eq.

10. Zusammensetzung gemäss einem der Ansprüche 1 bis 9, **dadurch gekennzeichnet, dass** das Verhältnis der Anzahl Thiolgruppen zur Anzahl Aldehydgruppen im Bereich von 1.5 bis 4, bevorzugt 1.7 bis 3, insbesondere 1.8 bis 2.5, liegt.

11. Zusammensetzung gemäss einem der Ansprüche 1 bis 10, **dadurch gekennzeichnet, dass** mindestens ein Füllstoff ausgewählt aus Aluminiumoxid, Aluminiumhydroxid, Zinkoxid und Zinkhydroxid enthalten ist.

12. Zusammensetzung gemäss einem der Ansprüche 1 bis 11, **dadurch gekennzeichnet, dass** als Katalysator mindestens eine anorganische oder organische Säure oder eine zu einer Säure hydrolysierbare Verbindung enthalten ist.

13. Zusammensetzung gemäss einem der Ansprüche 1 bis 12, **dadurch gekennzeichnet, dass** als Haftvermittler mindestens ein Mercaptosilan enthalten ist.

14. Ausgehärtete Zusammensetzung erhalten aus der härtbaren Zusammensetzung gemäss einem der Ansprüche 1 bis 13 nach dem Vermischen der Komponenten.

15. Verwendung der Zusammensetzung gemäss einem der Ansprüche 1 bis 13 als elastischer Klebstoff, elastischer Dichtstoff oder elastische Beschichtung, wobei die erste und die zweiten und gegebenenfalls vorhandenen weiteren Komponenten miteinander vermischt werden und die vermischte Zusammensetzung im flüssigen Zustand auf mindestens ein Substrat appliziert wird.
